# EUROPEAN PATENT SPECIFICATION

(11) **EP 4 514 753 B1**
(45) Date of publication and mention of the grant of the patent: **31.12.2025**
(21) Application number: 23729913.6
(22) Date of filing: 15.05.2023
(51) Int. Cl.: C01G 99/00, C01F 17/20, C01F 17/247

(54) **CERIUM HYDROXY CARBONATE COMPOSITION**
CER-HYDROXYCARBONAT-ZUSAMMENSETZUNG
COMPOSITION D'HYDROXYCARBONATE DE CÉRIUM

(30) Priority: 23.05.2022 US 202263344948 P
(43) Date of publication of application: 05.03.2025
(73) Proprietor: Rohm and Haas Company, Collegeville, PA 19426 (US)
(72) Inventor: MONEYPENNY, Timothy P., Collegeville, Pennsylvania 19426 (US); ALDERFER, Keith A., Collegeville, Pennsylvania 19426 (US); BOHLING, James C., Collegeville, Pennsylvania 19426 (US); CALLEJAS, Juan F., Collegeville, Pennsylvania 19426 (US)
(74) Representative: Beck Greener LLP
(86) International application number: PCT/US2023/022201
(87) International publication number: WO 2023/229863

(56) References cited:
- EP-A2- 2 481 709
- US-A1- 2020 339 435
- MISHRA MANISH K. ET AL: "Tandem Catalytic Antioxidant Nanoparticles Comprising Cerium Carbonate and Photoactive Metal Oxides", ACS APPLIED NANO MATERIALS, vol. 4, no. 11, 26 November 2021 (2021-11-26), pages 11590 - 11600, XP93075901, ISSN: 2574-0970, DOI: 10.1021/acsanm.1c02128
- MISHRA MANISH K. ET AL: "Tandem Catalytic Antioxidant Nanoparticles Comprising Cerium Carbonate and Photoactive Metal Oxides", ACS APPLIED NANO MATERIALS, vol. 4, no. 11, 26 November 2021 (2021-11-26), pages 11590 - 11600, XP093075901, ISSN: 2574-0970, DOI: 10.1021/acsanm.1c02128

## Description

### Background of the Invention

The present invention relates to a cerium hydroxy carbonate composition, which is useful for improving tint retention and attenuating undesirable color change in paint formulations. Cerium (III) carbonate has recently been reported to be an effective additive for improving tint retention and reducing color change in paint coatings. (See US 2021/1888227 A1 (Bohling), pp. 7-9.) Bohling discloses that a 20 wt.% aqueous wet paste of ligand-capped cerium (III) carbonate particles having a z-average particle size of 110 ± 5 nm can be prepared by admixing a solution of ammonium cerium (III) nitrate and a solution of a chelating agent (EDTA) and ammonium carbonate. (Pg. 5, lines 1-6.) The chelating agent is believed to "promote the formation of the nanodisperse particles while stabilizing the particles against agglomeration." (Pg. 3, lines 27-29.)

US 8,637,153 B2 (Cho) discloses (col. 10, lines 5-29) a method for preparing a crystalline cerium (III) carbonate by first contacting a hydrate of Ce(NO₃)₃ with urea at a temperature in the range of from 80 °C to 100 °C, then adding 10 to 30 weight percent of a polymer dispersant such as polyethylene glycol or polyacrylic acid to the admixture. (Col. 10, lines 22-24; and col. 5, lines 61-65.) Water is then removed, and the temperature is raised to 140 °C. After completion of the reaction, the product may be washed with water to remove unreacted urea and the polymer dispersant, then dried to isolate a crystalline solid. The volume mean diameter of experimentally prepared particles are reported to be in the range of from 75 nm to 90 nm (Col. 12, Table 1); in general, Cho discloses that particle sizes are controllable by varying the amounts and molecular weights of the polymer dispersants. (Col. 8, lines 19-30.) The cerium (III) carbonate is then used as a precursor to prepare uniform sized cerium oxide nanoparticles. (Col. 13, lines 3-8.)

US2020/339435 A1 discloses a composition comprising, among other species, a cerium (III) compound such as cerium hydroxide carbonate., water and polyacrylic based dispersants.

EP2481709 A2 discloses that a composition comprising cerium oxide, water and a carboxylate functionalized dispersant in an amount of 0,1 to 3% wt can be prepared and used for chemical mechanical polishing.

There is a need in the field of tint retention paint additives to design a more sustainable way of preparing an additive that does not require chelating agents or non-biodegradable polymer dispersants. There is also a need to prepare the additive at a higher solids content to allow formulators greater flexibility in the preparation of paints.

### Summary of the Invention

The present invention addresses a need in the art by providing a composition comprising, based on the weight of the composition, from 20 to 70 weight percent water, from 25 to 75 weight percent cerium (III) hydroxy carbonate, and from 0.5 to 8 weight percent of a carboxylate functionalized dispersant. The composition of the present invention provides a high solids content additive that preserves color retention and resists unwanted color change.

### Detailed Description of the Invention

The present invention is a composition comprising, based on the weight of the composition, from 20 to 70 weight percent water, from 25 to 75 weight percent cerium (III) hydroxy carbonate, and from 0.5 to 8 weight percent of a carboxylate functionalized dispersant. The composition is advantageously prepared by admixing cerium (III) hydroxy carbonate powder with a premix of water and the conjugate base of an acid functionalized dispersant. As used herein "a carboxylate" refers to a conjugate base (i.e., salt) of a carboxylic acid, wherein at least 90 percent or at least 95 or at least 99 percent of the carboxylic acid groups of the dispersant are in the form of the salt.

Suitable carboxylate functionalized dispersants include salts of polyacrylic acid and polymethacrylic acid homopolymers and copolymers such as the sodium salt of polyacrylic acid, commercially available as TAMOL^{™} 963 Dispersant (A trademark of The Dow Chemical Company or its Affiliates). The pH of the premix is advantageously increased using a suitable base such as ammonium hydroxide, preferably to a pH of ≥ 6.0.

The concentration of water in the composition is from 20 or from 25 or from 28 weight percent, to 70 or to 55 or to 40 or to 35 weight percent, based on the weight of the composition. The concentration of the cerium (III) hydroxy carbonate in the composition is in the range of from 25 or from 40 or from 55 or from 60 or from 65 weight percent, to 75 or to 72 or to 70 weight percent, based on the weight of the composition. The concentration of the carboxylate functionalized dispersant is in the range of from 0.5 or from 1 or from 1.5 weight percent, to 8 or to 5 or to 3 or to 2.5 weight percent, based on the weight of the composition.

Cerium (III) hydroxy carbonate powder can be prepared by contacting at a temperature in the range of from 110 °C to 200 °C, and in the substantial absence of a polymer dispersant, cerium (III) nitrate and urea. As used herein, the term "substantial absence of a polymer dispersant" refers to less than 5, preferably less than 1, more preferably less than 0.1, and most preferably 0 weight percent, based on the weight of cerium (III) nitrate, of a polymer dispersant in a polymer melt of cerium (III) nitrate and urea. More particularly, a polymer dispersant refers to polyethylene glycol; a polymer functionalized with carboxylic acid groups such as polyacrylic acid and polymethacrylic acid; polyvinyl alcohol; or polyvinylpyrrolidone; or a combination thereof.

Preferably, the reaction is also conducted in the substantial absence of a chelating agent that is capable of forming a capping ligand with the cerium (III) hydroxy carbonate. The term "substantial absence of a chelating agent that is capable of forming a capping ligand with the cerium (III) hydroxy carbonate" refers to less than 1, preferably less than 0.5, more preferably less than 0.1, and most preferably 0 weight percent, based on the weight of cerium (III) nitrate, of the chelating agent, which is a) an amine carboxylic acid or a salt thereof, such as ethylene diamine tetraacetic acid (EDTA), ethylene diamine diacetic acid (EDDA), and nitrolotriacetic acid (NTA); and b) an amine phosphonic acid or a salt thereof such as aminotrimethyl phosphonic acid (ATMP), 6-amino-2-[bis(carboxymethyl)amino]hexanoic acid, and N-(phosphonomethyl)iminodiacetic acid (PIDA).

As used herein, "a cerium (III) nitrate" refers to an anhydrous or a hydrated cerium (III) nitrate. The cerium (III) nitrate is preferably used as a hydrate, more particularly a hexahydrate. The reaction of cerium (III) nitrate and urea is most preferably carried out under neat conditions, i.e., solvent-free and water-free, other than water arising from the hydrate. It is also preferred that the reaction be carried out with the combination of cerium (III) nitrate and urea comprising at least 95, or at least 98, or at least 99 or 100 weight percent of the components in the initial reaction mixture.

The mole-to-mole ratio of the cerium (III) nitrate to urea is preferably in the range of from 1:3, or from 1:4, or from 1:5, to 1:20, or to 1:10, or to 1:8. The reaction is carried out at a temperature in the range of from 110 °C or from 125 °C, or from 140 °C, to 200 °C, or to 180 °C, or to 160 °C and for a time sufficient to produce a satisfactory conversion of the desired product, generally in the range of from 1 to 10 hours. It has been discovered that the z-average particle size of the product, as measured by dynamic light scattering, can be controlled in the range of about 100 nm to 1000 nm by adjusting the relative amounts of cerium (III) nitrate and urea and by varying temperature. In general, higher temperatures and higher urea:cerium (III) nitrate molar ratios were found to provide smaller particles sizes.

The composition of the present invention is useful as a high solids content additive that promotes color retention and inhibits undesirable color change in paint coatings. The composition is advantageously combined with ingredients that are used to make paints including preservatives, dispersants, surfactants, defoamers, opacifying pigments, extenders, binders, solvents, coalescents, rheology modifiers, and colorants.

### Intermediate Example 1 - Preparation of Cerium (III) Hydroxy Carbonate

Cerium (III) nitrate hexahydrate (30.0 g, 69.1 mmol, 1 eq.) and urea (25.0 g, 416 mmol, 6 eq.) were added to a round bottom flask equipped with a stirring bar, a condenser, and a Dean-Stark trap. The solid mixture was heated to 150 °C with stirring for 5 h. The mixture was allowed to cool to below 100 °C, after which time water (80 g) was added to wash the material. The aqueous slurry was centrifuged at 18,500 rpm for 5 min, and the solids were separated, then subjected to three more rounds of washing and centrifugation. The solids were collected and allowed to dry at room temperature to yield 13.7 g (91.3 % yield) of a white powder, identified by X-ray powder diffraction as hexagonal cerium (III) hydroxy carbonate. This material exhibited the same powder XRD pattern as observed in FIG. 7 of Cho.

### Example 1 - Preparation of a Cerium (III) Hydroxy Carbonate Composition

A liquid premix of TAMOL^{™} 963 Dispersant (0.07 g), ammonium hydroxide (0.02 g, 28 wt.% aq.), and water (1.01 g) was added to a vessel containing dry cerium (III) hydroxy carbonate as prepared in Intermediate Example 1 (2.33 g). The mixture was pre-dispersed with a glass rod until a smooth textured slurry was obtained. The slurry was blended using a Flacktec dual axis mixer at 2900 rpm for 3 to 5 min.

Table 1 illustrates semi-gloss paint formulations for blue and red paints with and without cerium (III) hydroxy carbonate. All numbers are reported as parts by weight. In-can Preservative refers to Kathon LX In-can Preservative (1.5 wt.% active); Dry Film Preservative refers to Bioban Dry Film Preservative; Dispersant refers to TAMOL^{™} 165A Dispersant; HW-1000 Surfactant refers to TRITON^{™} HW-1000 Surfactant; Defoamer refers to DOWSIL^{™} 8590 Defoamer; TiO₂ refers to Ti-Pure R-706 TiO₂; Extender refers to Minex 4 Extender; Photo TiO₂ refers to Aeroxide TiO₂ P25 (22 wt.% active); 15-S-12 Surfactant refers to TERGITOL^{™} 15-S-12 Surfactant; Latex refers to RHOPLEX^{™} AC-261LF Aqueous Emulsion; Coalescent refers to Optifilm Enhancer 400 Coalescent; RM-3030 refers to ACRYSOL^{™} RM-3030 Rheology Modifier; RM-8W refers to ACRYSOL^{™} RM-8W Rheology Modifier; Red Colorant refers to ColorTrend 808-0836 Organic Red; and Blue Colorant refer to ColorTrend 808-7214 Phthalo Blue.

Photo TiO₂ is a high purity, predominately anatase TiO₂ with outstanding photocatalytic activity that is effective at accelerating the paint degradation process.

**Table 1 - Semi-gloss paint formulations with Ce(OH)CO₃**

| | C Ex1 | Ex 1 | Ex 2 | CEx2 | Ex 3 | Ex 4 |
|---|---|---|---|---|---|---|
| Paint Color | Blue | Blue | Blue | Red | Red | Red |

| **Step 1: Cowles grind** | | | | | | |
|---|---|---|---|---|---|---|
| Water | 7.52 | 7.50 | 7.47 | 7.53 | 7.51 | 7.48 |
| In-can Preservative | 0.16 | 0.16 | 0.16 | 0.16 | 0.16 | 0.16 |
| Dry Film Preservative | 0.53 | 0.53 | 0.53 | 0.53 | 0.53 | 0.53 |
| Dispersant | 0.80 | 0.80 | 0.80 | 0.80 | 0.80 | 0.80 |
| HW-1000 Surfactant | 0.18 | 0.18 | 0.18 | 0.18 | 0.18 | 0.18 |
| Defoamer | 0.09 | 0.09 | 0.09 | 0.09 | 0.09 | 0.09 |
| TiO₂ | 22.12 | 22.05 | 21.98 | 22.15 | 22.08 | 22.01 |
| Extender | 4.42 | 4.41 | 4.40 | 4.43 | 4.42 | 4.40 |

| **Step 2: Flacktec dispersion addition** | | | | | | |
|---|---|---|---|---|---|---|
| Ce(OH)CO₃ (69 wt.% aq.) | 0.00 | 0.64 | 1.27 | 0.00 | 0.64 | 1.27 |
| Photo TiO₂ | 7.94 | 7.91 | 7.89 | 7.95 | 7.92 | 7.90 |

| **Step 3: Let-Down** | | | | | | |
|---|---|---|---|---|---|---|
| 15-S-12 Surfactant | 0.18 | 0.18 | 0.18 | 0.18 | 0.18 | 0.18 |
| Latex | 40.35 | 40.21 | 40.08 | 40.40 | 40.26 | 40.13 |
| Ammonia (28%) | 0.09 | 0.09 | 0.09 | 0.09 | 0.09 | 0.09 |
| Defoamer | 0.05 | 0.05 | 0.05 | 0.05 | 0.05 | 0.05 |
| Propylene Glycol | 0.19 | 0.19 | 0.19 | 0.19 | 0.19 | 0.19 |
| Coalescent | 1.99 | 1.99 | 1.98 | 2.00 | 1.99 | 1.98 |
| RM-3030 | 0.58 | 0.59 | 0.57 | 0.58 | 0.59 | 0.57 |
| RM-8W | 0.19 | 0.22 | 0.21 | 0.19 | 0.22 | 0.21 |
| Water | 9.40 | 9.02 | 8.70 | 9.41 | 9.03 | 8.71 |

| **Step 4: Colorant Addition** | | | | | | |
|---|---|---|---|---|---|---|
| Red Colorant | 0.00 | 0.00 | 0.00 | 3.10 | 3.09 | 3.08 |
| Blue Colorant | 3.22 | 3.21 | 3.20 | 0.00 | 0.00 | 0.00 |
| Total Wt | 100 | 100 | 100 | 100 | 100 | 100 |

### Procedure for Measuring Color Retention

ASTM D4587-11 was used to simulate natural exterior weathering from sunlight and moisture cycles that are typical for exterior coatings. Cycle #4 from Table 1 of the ASTM method describes the conditions used. QUV Accelerated Weathering Tester model QUV/se was used for the accelerated weathering experiments. Q-Panel (AL-36 3" x 6") chrome treated aluminum panels were used as the substrates for the coating applications. A vacuum plate was used to hold the aluminum panels during application of the test paint. A 10-mil edge of a 2" width multiple clearance film applicator was used to apply the coatings with an approximate wet film thickness of 5 mil. Coated panels were allowed to dry over 7 d in a controlled temperature lab (72 °F (~24 °C)/ 50% relative humidity) before exposure to accelerated weathering. A BYK Specto-guide 45/0 spectrophotometer (cat: 6801) was used to record L*, a*, b* color values. Color values were recorded prior to exposure in the QUV unit (Time = 0) and at approximate increments of 500 h total QUV unit operation time. The 500-h testing increments were continued for 1951 h, which was found sufficient to observe differentiated degradation between experimental samples. ΔL* was measured to compare test results from exposed panels. Higher ΔL* values (L*_{f} - L*ₒ) indicate a lighter color of the exposed coating, characteristic of typical paint color fade. Table 2 illustrates the results of the exposure testing.

**Table 2 - Exposure Test Results**

| Paint ID | ΔL* |
|---|---|
| C Ex 1 | 3.84 |
| Ex 1 | 1.82 |
| Ex 2 | 1.44 |
| C Ex 2 | 2.77 |
| Ex 3 | 1.92 |
| Ex 4 | 1.54 |

The ΔL* values for the samples containing cerium (III) hydroxy carbonate show marked improvement in retaining tint over the control samples.

## Claims

1. A composition comprising, based on the weight of the composition, from 20 to 70 weight percent water, from 25 to 75 weight percent cerium (III) hydroxy carbonate, and from 0.5 to 8 weight percent of a carboxylate functionalized dispersant.

2. The composition of Claim 1 which comprises, based on the weight of the composition, from 25 to 55 weight percent water; from 40 to 72 weight percent cerium (III) hydroxy carbonate; and from 1 to 5 weight percent of the carboxylate functionalized dispersant.

3. The composition of Claim 1 which comprises, based on the weight of the composition, from 28 to 40 weight percent water; from 55 to 70 weight percent cerium (III) hydroxy carbonate; and from 1 to 3 weight percent of the carboxylate functionalized dispersant.

4. The composition of Claim 1 which comprises, based on the weight of the composition, from 28 to 35 weight percent water; from 60 to 70 weight percent cerium (111) hydroxy carbonate; and from 1.5 to 2.5 weight percent of the carboxylate functionalized dispersant.

5. The composition of Claim of any of Claims 1 to 4 wherein the carboxylate functionalized dispersant is a salt of a polyacrylic acid homopolymer or copolymer.

6. The composition of any of Claims 1 to 4 wherein the carboxylate functionalized dispersant is a salt of a polyacrylic acid homopolymer.

7. The composition of Claim 6 which has a pH ≥ 6.0.

## Patentansprüche

1. Zusammensetzung umfassend, bezogen auf das Gewicht der Zusammensetzung, zu 20 bis 70 Gewichtsprozent Wasser, zu 25 bis 75 Gewichtsprozent Cer(III)-hydroxycarbonat und zu 0,5 bis 8 Gewichtsprozent ein carboxylatfunktionalisiertes Dispergiermittel.

2. Zusammensetzung nach Anspruch 1, die, bezogen auf das Gewicht der Zusammensetzung, zu 25 bis 55 Gewichtsprozent Wasser; zu 40 bis 72 Gewichtsprozent Cer(III)-hydroxycarbonat und zu 1 bis 5 Gewichtsprozent das carboxylatfunktionalisierte Dispergiermittel umfasst.

3. Zusammensetzung nach Anspruch 1, die, bezogen auf das Gewicht der Zusammensetzung, zu 28 bis 40 Gewichtsprozent Wasser; zu 55 bis 70 Gewichtsprozent Cer(III)-hydroxycarbonat und zu 1 bis 3 Gewichtsprozent das carboxylatfunktionalisierte Dispergiermittel umfasst.

4. Zusammensetzung nach Anspruch 1, die, bezogen auf das Gewicht der Zusammensetzung, zu 28 bis 35 Gewichtsprozent Wasser; zu 60 bis 70 Gewichtsprozent Cer(III)-hydroxycarbonat und zu 1,5 bis 2,5 Gewichtsprozent das carboxylatfunktionalisierte Dispergiermittel umfasst.

5. Zusammensetzung nach einem Anspruch der Ansprüche 1 bis 4, wobei das carboxylatfunktionalisierte Dispergiermittel ein Salz eines Polyacrylsäurehomopolymers oder -copolymers ist.

6. Zusammensetzung nach einem der Ansprüche 1 bis 4, wobei das carboxylatfunktionalisierte Dispergiermittel ein Salz eines Polyacrylsäurehomopolymers ist.

7. Zusammensetzung nach Anspruch 6, die einen pH-Wert ≥ 6,0 aufweist.

## Revendications

1. Composition comprenant, sur la base du poids de la composition, de 20 à 70 pour cent en poids d'eau, de 25 à 75 pour cent en poids d'hydroxy carbonate de cérium (III), et de 0,5 à 8 pour cent en poids d'un dispersant à fonctionnalité carboxylate.

2. Composition selon la revendication 1 qui comprend, en fonction du poids de la composition, de 25 à 55 pour cent en poids d'eau ; de 40 à 72 pour cent en poids d'hydroxy carbonate de cérium (III) ; et de 1 à 5 pour cent en poids du dispersant à fonctionnalité carboxylate.

3. Composition selon la revendication 1 qui comprend, en fonction du poids de la composition, de 28 à 40 pour cent en poids d'eau ; de 55 à 70 pour cent en poids d'hydroxy carbonate de cérium (III) ; et de 1 à 3 pour cent en poids du dispersant à fonctionnalité carboxylate.

4. Composition selon la revendication 1 qui comprend, en fonction du poids de la composition, de 28 à 35 pour cent en poids d'eau ; de 60 à 70 pour cent en poids d'hydroxy carbonate de cérium (III) ; et de 1,5 à 2,5 pour cent en poids du dispersant à fonctionnalité carboxylate.

5. Composition selon l'une quelconque des revendications 1 à 4, dans laquelle le dispersant à fonctionnalité carboxylate est un sel d'un homopolymère ou copolymère d'acide polyacrylique.

6. Composition selon l'une quelconque des revendications 1 à 4, dans laquelle le dispersant à fonctionnalité carboxylate est un sel d'un homopolymère d'acide polyacrylique.

7. Composition selon la revendication 6 qui a un pH ≥ 6.0.
